# EUROPEAN PATENT APPLICATION

(11) **EP 1 719 598 A1**
(43) Date of publication of application: **08.11.2006**
(21) Application number: 05719552.1
(22) Date of filing: 25.02.2005
(51) Int. Cl.: B29C 33/38, B29C 33/02, B29C 33/42, B29C 35/02, B29L 30/00

(54) **METHOD OF IMPLANTING BLADE, TIRE VULCANIZING MOLD, AND BLADE**

(30) Priority: 27.02.2004 JP 2004054317
(71) Applicant: Kabushiki Kaisha Bridgestone, Chuo-ku, Tokyo 104-8340 (JP)
(72) Inventor: TANAKA, Hideaki KABUSHIKI KAISHA BRIDGESTONE, Kodaira-shi, Tokyo 1878531 (JP); IWAMOTO, Gyouei KABUSHIKI KAISHA BRIDGESTONE, Kodaira-shi, Tokyo 1878531 (JP)
(74) Representative: Whalley, Kevin
(86) International application number: PCT/JP2005/003201
(87) International publication number: WO 2005/082591

(57) **Abstract**

To plant a blade easily and surely even when a tread pattern is complex, the piece 14 of a tire curing metal mold is manufactured by a powder sintering method in which sinterable powders are heated and sintered to form layers, a blade planting groove 17 having a driven groove portion 17a which is a straight groove and a stepped portion 17b which is formed at the bottom of the driven groove portion 17a and has a larger width than the width of the driven groove portion 17a is formed in the above piece 14, and the blade 20 having a bent portion 22 on the planting side of a rectangular blade body 21 is planted into the planting groove 17.

## Description

### Background of the Invention

### [Field of the Invention]

The present invention relates to a method of post-planting and fixing a blade in a tire curing metal mold having projections for forming a tread pattern on the inner surface of the cavity of the metal mold.

### [Description of the Prior Art]

To form a tire, a metal mold for curing crude rubber with heat and pressure by contact bonding the outer surface of a green tire to the inner wall of a heated metal mold by applying pressure to the inner side of the molded green tire (to be referred to as "tire curing metal mold" hereinafter) is used. A plurality of projections (form ribs) for forming a tire tread pattern are formed on the inner wall (tire tread side) of the cavity of the tire curing metal mold, and a blade for forming a sipe is planted in the tread land portions of grooves between projections.

To plant and fix a blade in the tire curing metal mold, in the prior art, fine grooves for planting the blade on the tire tread side of the metal mold are formed by mechanical processing, and the blade is inserted into the fine grooves and welded, or a hole reaching the blade is formed obliquely from the side of the inserted blade, a fixing pin is driven into the hole, and the pin driven portion is buildup welded to fix the blade in the above metal mold.

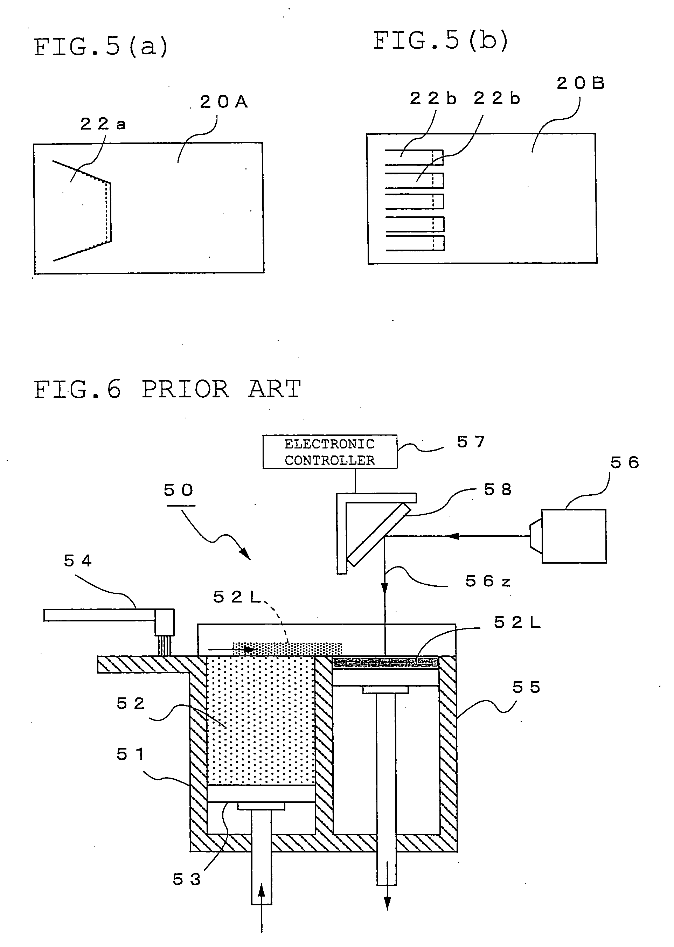

Meanwhile, there is proposed a method of manufacturing a tire curing metal mold based on a 3-D image of a tire to be manufactured without using a tool (refer to patent document 1, for example). This method is to manufacture at least part or all of the metal mold by employing a powder sintering method for heating and sintering sinterable powders made of a metal material or ceramic material by a laser beam to form layers. A laser sintering apparatus 50 as shown in Fig. 6 is used in this method. In this laser sintering apparatus 50, fine particles 52 having an average particle size of 30 to 100 µm are contained in a holding chamber 51, a lifting plate 53 in the holding chamber 51 is moved up a predetermined distance to take out a powder layer 52L having a thickness of 0.2 to 0.5 mm and transfer it into a recovery chamber 55 adjacent to the holding chamber 51 by a distribution doctor blade 54, and a laser beam 56z is applied from a laser machine 56 as local heating means to the powder layer 52L transferred into the above recovery chamber 55 to sinter the above fine particles 52 so as to form a layer, thereby forming a sintered laminate. The direction of a mirror 58 for controlling the optical path of the above laser beam 56z is controlled by an electronic controller 57 based on the pre-stored tire CAD drawing to scan the above laser beam 56z, and the above particle layer 52L is sintered in a space whose boundary is set to the predetermined contour. Since each layer of the sintered laminate having the above predetermined contour can be thereby formed, a tire curing metal mold having holes or pores with a very small diameter such as an air pit and an exhaust passage which have been difficult to be formed by mechanical processing and grooves which are undercut can be easily manufactured by repeating the above step.
Patent document 1: JP-A 10-244540

### Summary of the Invention

In the above blade fixing method of the prior art, since the position of fixing the blade is a groove in the metal mold, when the tread pattern is complex, the machining of fine grooves for planting a blade and holes for accepting a fixing pin and welding become difficult, and further the welded portions projecting from the metal mold must be ground and surface finished, thereby reducing work efficiency. Further, from the aspect of quality, the position of fixing the blade is unstable and when the fixing of the blade is incomplete, the blade may slip out of the position. Therefore, an inspection step must be carried out to check if the blade slips out of the position or not.

Then, when the tire curing metal mold is manufactured by employing the above powder sintering method, even if the tread pattern is complex, it is possible to form the above grooves and the holes for accepting a fixing pin easily. Even in this case, welding and surface finishing after welding cannot be omitted. Therefore, the work efficiency is not so improved. Since it is considered that the slip-out of the blade is caused by the blade fixing method itself, it is difficult to omit the inspection step at present.

It is an object of the present invention which has been made in view of the above problems of the prior art to provide a method capable of planting and fixing a blade easily and surely even when a tread pattern is complex.

The inventors of the present invention have conducted intensive studies and have paid attention to the fact that when the planting side of a blade is bent and inserted into a fine groove having a slightly larger width than the thickness of the blade, the blade tries to change its shape in the opening direction after it is inserted as the blade is made of a material having elasticity such as a metal. Therefore, they have found that when a portion for catching a bent portion of the blade is formed in the fine groove for planting a blade, the above blade can be fixed in the groove for planting a blade surely. The present invention has been accomplished based on this finding.

That is, according to a first aspect of the invention, there is provided a method of planting a blade in a tire curing metal mold to fix it, comprising the steps of:
manufacturing a portion including at least a blade planting groove of the metal mold by a powder sintering method in which sinterable powders are heated and sintered to form layers;
forming a stepped portion having a larger width than the width of the above blade planting groove and formed at the bottom of the blade plating groove; and
planting a blade having a bent portion which is integrated with the blade on the planting side and bent at a predetermined angle from the surface of the blade into this planting groove.

According to a second aspect of the present invention, there is provided a method of planting a blade, wherein a cut whose planting side is closed is made on the planting side of the blade, a portion surrounded by the cut portion is bent, and the blade is planted into the planting groove.

According to a third aspect of the present invention, there is provided a tire curing metal mold used in the method of planting a blade according to the above first or second aspect, comprising a portion including at least a blade planting groove manufactured by a powder sintering method in which sinterable powders are heated and sintered to form layers and a stepped portion having a larger width than the width of the blade planting groove and formed at the bottom of the blade planting groove.

According to a fourth aspect of the present invention, there is provided a tire curing metal mold, wherein a metal or an alloy is infiltrated into the pores of a sintered body constituting the metal mold.

According to a fifth aspect of the present invention, there is provided a blade used in the method of planting a blade according to the first or second aspect, having a bent portion which is integrated with the blade, bent at a predetermined angle from the surface of the blade and formed on the planting side of the blade.

According to a sixth aspect of the present invention, there is provided a blade, wherein a cut whose planting side is closed is made on the planting side of the blade and a portion surrounded by the cut portion is bent to form the bent portion.

### Effect of the Invention

According to the present invention, a stepped portion having a larger width than the width of the blade planting groove is formed at the bottom of the blade planting groove formed on the tire tread side of a metal mold, and a blade having a bent portion which is formed by making a cut whose planting side is closed in a planting portion and bending a portion surrounded by the cut portion, is integrated with the blade on the planting side and bent at a predetermined angle from the surface of the blade is planted into the planting groove. After the blade is planted, the above bent portion warps and is caught by the stepped portion so that the blade is fixed in the above planting groove surely. Therefore, the blade can be fixed in the above planting groove surely without carrying out blade fixing processing.

Although the above stepped portion is formed at an undercut position from the planting groove, as a portion including at least the above planting groove of the metal mold is manufactured by a powder sintering method in which sinterable powders are heated and sintered to form layers, the planting groove having the above stepped portion can be easily formed, and an additional processing step such as the processing of a groove is not required.

### Brief Description of the Drawings

Fig. 1 is a schematic sectional view of a tire curing metal mold according to an embodiment of the present invention;
Fig. 2 is a perspective view of a blade according to the embodiment of the present invention;
Fig. 3 is a diagram showing an infiltration apparatus;
Figs. 4(a) and 4(b) are diagrams showing the method of planting a blade according to the embodiment;
Figs. 5(a) and 5(b) are diagrams showing other examples of the blade according to the embodiment; and
Fig. 6 is a diagram showing the schematic constitution of a laser sintering apparatus used in the powder sintering method.

### Detailed Description of the Preferred Embodiment

A preferred embodiment of the present invention will be described hereinunder with reference to the accompanying drawings.

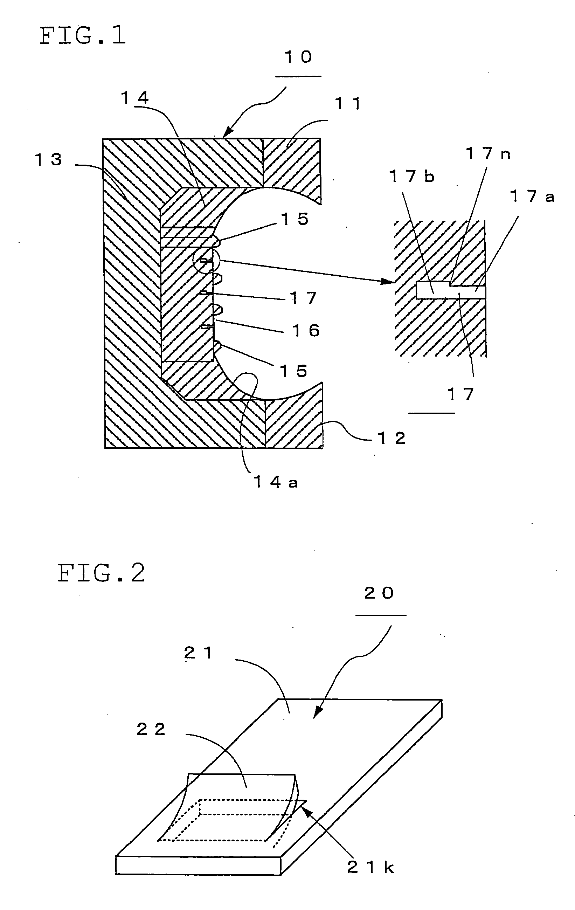

Fig. 1 is a schematic sectional view of a tire curing metal mold 10 according to the preferred embodiment. This metal mold 10 is composed of a plurality of sector molds, each consisting of upper and lower molds 11 and 12 to be brought into contact with tire side portions and a plurality of pieces 14 fixed to a holder 13, all of which are arranged in a loop in the circumferential direction of a tire. A tread forming surface 14a which is the recess of the piece 14 is a tire forming surface, that is, a portion to be brought in close contact with the rubber of a green tire to be cured. A plurality of projections 15 (form ribs) corresponding to the grooves of the tire tread are formed on this tire forming surface (tread forming surface) 14a, and fine grooves (to be referred to as "blade planting grooves" hereinafter) 17 for planting the blade 20 for forming a sipe in a tread land portion are formed in grooves 16 between the projections 15 and 15. Each of the blade planting grooves 17 has a driven groove portion 17a which is a straight groove extending from the tire forming surface14a of the above piece 14 toward the holder 13 and a stepped portion 17b communicating with the above driven groove portion 17a and formed at the bottom of the driven groove portion 17a. This stepped portion 17b projects in a direction perpendicular to the extending direction of the above driven groove portion 17a, and its width is larger than the width of the above driven groove portion 17a.

Since the above stepped portion 17b is formed at an undercut position from the above driven groove portion 17a and the above driven groove portion 17a has a small width, it is very difficult to form the above blade planting groove 17 by mechanical processing or discharge processing. In this embodiment, as each piece 14 is manufactured by a powder sintering method in which sinterable powders are heated and sintered to form layers, the planting groove 17 having the above stepped portion 17b can be easily formed.

Fig. 2 is a perspective view of the blade 20 to be planted into the blade planting groove 17 of the piece 14. In this embodiment, a substantially U-shaped cut 21k is made on the planting side of a rectangular blade body 21, and a portion surrounded by the above cut 21k is bent at a predetermined angle from the surface of the above blade body 21 by pliers to be elastically deformed so as to form a bent portion 22. The above cut 21k can be made by laser processing or discharge processing.

Since the above blade body 21 is made of a material having elasticity such as a metal, the above bent portion 22 becomes a so-called "spring". Therefore, when the bent portion 22 is deformed toward the blade body 21 side or its opposite side from the position where it was bent, if the amount of deformation falls within elastic deformation, the above bent portion 22 is returned to the above position by the restoring force of the spring.

A description is subsequently given of the method of planting the blade according to the present invention.

Sinterable metal powders (for example, SUS powders) having an average particle diameter of 10 to 80 µm are heated with a laser beam as local heating means by using a sintering apparatus having the same constitution as the laser sintering apparatus 50 shown in Fig. 6 based on a 3D-CAD drawing on the preset piece 14 to form 3,000 to 5,000 layers at a pitch of 0.02 to 0.2 mm so as to manufacture the piece 14 having a plurality of projections 15 which will become the grooves of the tire and blade planting grooves 17 formed in the grooves 16 between the above projections 15 and 15.

The stepped portion 17b of the above blade planting groove 17 is formed at an undercut position from the above driven groove portion 17a and can be easily formed by using the above powder sintering method though it is difficult to be formed by mechanical processing. As details of the powder sintering method are the same as those of the prior art, a description thereof is omitted.

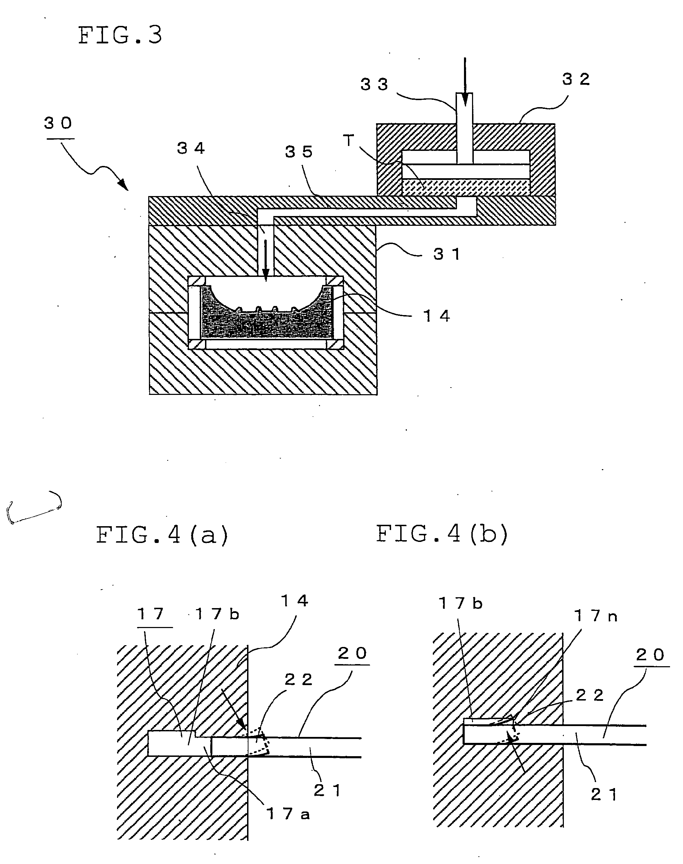

In this embodiment, the above manufactured piece 14 is further placed in the storage vessel 31 of an infiltration apparatus 30 as shown in Fig. 3, a metal T having a lower melting temperature than that of SUS constituting the above piece 14 (for example, copper) is heated at a temperature higher than its melting point, the molten metal T contained in an infiltration metal supply apparatus 32 is pressure supplied into a molten metal passage 35 communicating with the introduction port of the above storage vessel 31 by a piston 33 and introduced into the above storage vessel 31 to be infiltrated into the pores of the sintered body constituting the above piece 14. To infiltrate the above metal T, a vessel containing the pre-molten metal T may be prepared and the above piece 14 preheated at a predetermined temperature may be immersed in the vessel.

As shown in Figs. 4(a) and 4(b), the above blade 20 is then planted into the above blade planting groove 17. Since the width of the driven groove portion 17a is almost the same as the thickness of the blade body 21 when the blade 20 is driven into the above planting groove 17, the above bent portion 22 is pressed by the inner wall of the above driven groove portion 17a to be deformed toward the blade body 21 side and returned into the above substantially U-shaped cut 21k of the blade body 21. Therefore, the blade body 21 and the bent portion 22 become almost a single board, thereby making it easy to drive the blade 20 into the blade planting groove 17.

After the blade 20 is driven into the inside of the blade planting groove 17, the whole bent portion22 enters the stepped portion 17b having a larger width than the thickness of the above blade body 21, whereby the bent portion 22 tries to return to its original position to stretch. Therefore, when force for pulling out the above blade 20 is applied, the above bent portion 22 is caught by a catching portion 17n which is the edge on the tire forming surface side of the above stepped portion 17b to be locked. Therefore, after the driving of the above blade 20, the above blade 20 can be fixed in the above blade planting groove 17 without carrying out the work of fixing the above blade 20 such as welding.

Since the above blade 20 becomes almost a single board at the time of driving, the width of the above driven groove portion 17a may be made slightly larger than the thickness of the above blade 20 like the width of the fine groove of the prior art. The size of the gap between the blade 20 and the driven groove portion 17a is preferably set to 10 µm or less, whereby no play exists between the blade planting groove 17 and the blade 20, thereby making it possible to fix the above blade 20 in the above blade planting groove 17 surely. It is also possible to suppress the projection of rubber at the time of curing.

Thus, according to this embodiment, the blade planting groove 17 having a driven groove portion 17a which is a straight groove and a stepped portion 17b which is formed at the bottom of the driven groove portion 17a and has a larger width than the width of the above driven groove portion 17a is formed in the piece 14 of the tire curing metal mold 10, and the blade 20 manufactured by making a substantially U-shaped cut 21k on the planting side of the rectangular blade body 21 and forming a bent portion 22 by bending a portion surrounded by the above cut 21k is planted into the planting groove 17. Therefore, even when force for pulling out the above blade 20 is applied, the above bent portion 22 warps and is locked by the catching portion 17n of the above stepped portion 17b, thereby making it possible to fix the above blade 20 in the above blade planting groove 17 surely and to prevent the blade from being pulled out surely.

Since the above piece 14 is manufactured by the powder sintering method in which sinterable powders are heated and sintered to form layers, the blade planting groove 17 having a stepped portion 17b formed at an undercut position from the driven groove portion 17a can be easily formed.

In the above embodiment, the blade 20 having a bent portion 22 which is formed by making a substantially U-shaped cut 21k on the planting side of the blade body 21 has been described. The present invention is not limited to this. When a blade 20A having a trapezoidal bent portion 22a as shown in Fig. 5 (a) or a blade 20B having a plurality of rectangular bent portions 22b is used, the same effect can be obtained.

The blade planting method of the present invention can be applied not only to the rectangular blades 20, 20A and 20B shown in Fig. 2 and Figs. 5(a) and 5(b) but also to L-shaped, R-shaped and other blades.

In the above embodiment, the whole piece 14 is manufactured by the powder sintering method. Alternatively, a portion including the blade planting grooves 17 of the above piece 14, a portion having a complex inner wall shape of the metal mold and further a portion having a fine air pit and an exhaust passage are manufactured by the powder sintering method, other portions are manufactured by the casting method of the prior art, and they are assembled together.

### Industrial Feasibility

According to the present invention, since a blade can be fixed in a tire curing metal mold having projections for forming a tread pattern which are formed on the inner wall of the cavity of the metal mold surely, the quality of the tire can be improved, and extra processing is not required, thereby making it possible to greatly cut the number of steps.

## Claims

1. A method of planting a blade in a tire curing metal mold to fix it, comprising the steps of:
manufacturing a portion including at least a blade planting groove of the metal mold by a powder sintering method in which sinterable powders are heated and sintered to form layers;
forming a stepped portion having a larger width than the width of the above blade planting groove and formed at the bottom of the blade plating groove; and
planting a blade having a bent portion which is integrated with the blade on the planting side and bent at a predetermined angle from the surface of the blade into this planting groove.

2. The method of planting a blade according to claim 1, wherein a cut whose planting side is closed is made on the planting side of the blade, a portion surrounded by the cut portion is bent, and the blade is planted into the planting groove.

3. A tire curing metal mold used in the method of planting a blade according to claim 1 or 2, comprising a portion including at least a blade planting groove manufactured by a powder sintering method in which sinterable powders are heated and sintered to form layers and a stepped portion having a larger width than the width of the blade planting groove and formed at the bottom of the blade planting groove.

4. The tire curing metal mold according to claim 3, wherein a metal or an alloy is infiltrated into the pores of a sintered body constituting the metal mold.

5. A blade used in the method of planting a blade according to claim 1 or 2, having a bent portion which is integrated with the blade, bent at a predetermined angle from the surface of the blade and formed on the planting side of the blade.

6. The blade according to claim 5, wherein a cut whose planting side is closed is made on the planting side of the blade and a portion surrounded by the cut portion is bent to form the bent portion.
